# FASCICULE DE BREVET EUROPEEN

(11) **EP 2 121 355 B1**
(45) Date de publication et mention de la délivrance du brevet: **18.08.2010**
(21) Numéro de dépôt: 08708410.9
(22) Date de dépôt: 30.01.2008
(51) Int. Cl.: B60C 15/06

(54) **STRUCTURE DE BOURRELET DE PNEU**
REIFENWULSTSTRUKTUR
TYRE BEAD STRUCTURE

(30) Priorité: 12.02.2007 FR 0701047
(43) Date de publication de la demande: 25.11.2009
(73) Titulaire: Société de Technologie MICHELIN, 63000 Clermont-Ferrand (FR); MICHELIN Recherche et Technique S.A., 1763 Granges-Paccot (CH)
(72) Inventeur: GRISIN, Bopha, F-63410 Loubeyrat (FR); JOHNSON, Philippe, F-63800 Perignat sur Allier (FR); LENEPVEU, Olivier, F-63100 Clermont-Ferrand (FR)
(74) Mandataire: Diernaz, Christian
(86) Numéro de dépôt international: PCT/EP2008/051095
(87) Numéro de publication internationale: WO 2008/107234

(56) Documents cités:
- EP-A2- 0 287 497
- FR-A- 2 882 691
- US-A- 1 393 952

## Description

L'invention concerne les pneus à armature de carcasse radiale destinés à équiper des véhicules poids lourd et encore plus particulièrement la structure de bourrelet de ces pneus.

Un pneu de véhicule poids lourd comprend une partie de sommet surmontée radialement à l'extérieur d'une bande de roulement destinée à venir en contact avec la chaussée, cette partie de sommet étant prolongée de part et d'autre par des flancs se terminant par des bourrelets. Un pneu comprend une pluralité d'armatures de renforcement dont notamment une armature de carcasse dont le rôle est de résister aux efforts de la pression interne de gonflage du pneu. Cette armature de carcasse s'étend dans le sommet, les flancs du pneu et est ancrée à ses extrémités à des structures d'ancrage appropriées situées dans les bourrelets. L'armature de carcasse est en général composée d'une pluralité de renforts disposés parallèlement les uns aux autres et faisant un angle proche ou égal de 90 degrés avec la direction circonférentielle (dans ce cas, l'armature de carcasse est dite "radiale"). L'ancrage de l'armature de carcasse est le plus souvent réalisé - par retournement autour d'une structure d'ancrage ayant une rigidité circonférentielle appropriée, pour former axialement à l'extérieur une partie de retournement dont la longueur, mesurée par exemple par rapport au point radialement le plus à l'intérieur de la structure d'ancrage, est choisie pour assurer une endurance satisfaisante du pneu en utilisation. Axialement entre la partie de retournement et l'armature de carcasse, on trouve un ou des matériaux à base d'élastomère assurant un couplage mécanique des deux parties de l'armature de carcasse.

En utilisation, ce pneu est monté sur une jante de montage comprenant des sièges de jante destinés à être en contact avec les parties radialement les plus à l'intérieur des bourrelets et, axialement à l'extérieur de chaque siège, un rebord de jante destiné à fixer la position axiale dudit bourrelet lorsque le pneu est monté et gonflé à sa pression nominale.

Pour résister aux sollicitations mécaniques en roulage, il est connu de prévoir des armatures additionnelles de renforcement de bourrelet sous la forme notamment de nappes disposées contre au moins une partie du retournement de l'armature de carcasse.

Au cours du roulage, les bourrelets de pneus sont soumis à un grand nombre de cycles de flexion en s'enroulant autour des rebords de jante (c'est-à-dire en adoptant en partie la géométrie desdits rebords). Ces flexions se traduisent par de plus ou moins grandes variations de courbures en combinaison avec des variations de tension dans les armatures de renforcement des bourrelets et notamment dans la partie de retournement de l'armature de carcasse et dans ladite armature. Ces mêmes cycles induisent des efforts de compression et d'extension dans les matériaux constitutifs des bourrelets. Lors du roulage, on constate également un déplacement circonférentiel cyclique des renforts de l'armature de la nappe carcasse dans les flancs et les bourrelets du pneu. Par déplacement circonférentiel cyclique, on entend ici que le déplacement se fait dans un sens et dans le sens opposé à chaque tour de roue autour d'une position moyenne d'équilibre.

Le roulage génère dans les matériaux constituant le bourrelet, notamment dans les matériaux élastomères et plus particulièrement dans ceux qui sont situés à proximité immédiate des extrémités des armatures (extrémité de la partie retournée de l'armature de carcasse ou extrémités des armatures additionnelles) des contraintes et/ou des déformations qui peuvent conduire à une réduction plus ou moins sensible de la durée d'usage du pneu.

En effet, ces contraintes et/ou déformations peuvent faire apparaître des décollements et fissures au voisinage des extrémités desdites armatures. Du fait de l'orientation radiale des renforts et de la nature desdits renforts (en général, ce sont des câbles métalliques) qui la composent, l'extrémité du retournement de l'armature de carcasse est particulièrement sensible à ce mécanisme.

Le document publié sous la référence WO 2006/013201-A1 décrit une structure de bourrelet de pneu dans laquelle l'armature de carcasse a été, non plus retournée en s'enroulant partiellement sur une tringle, mais enroulée sur au moins un tour complet autour d'une structure d'ancrage dans chacun des bourrelets. De cette façon, l'extrémité de l'armature de carcasse est située dans une zone du bourrelet qui n'est pas soumise à de fortes sollicitations cycliques ; il est ainsi possible d'augmenter la performance d'endurance des bourrelets.

Cependant, si cette structure de bourrelet de pneu est efficace sur un plan mécanique, il n'en demeure pas moins qu'elle reste coûteuse et délicate à mettre en oeuvre sur des moyens industriels de fabrication usuels.

Le document FR-A-2882691 décrit un pneumatique selon le préambule de la revendication 1.

La présente invention vise à prévenir les risques de dégradation du bourrelet en proposant une structure de bourrelet ayant une rigidité suffisante pour résister aux efforts de flexion et aux mouvements circonférentiels des armatures pendant le roulage tout en étant facile à mettre en oeuvre.

Les inventeurs se sont fixés pour objectif de rechercher une solution performante vis-à-vis des sollicitations décrites plus haut au cours du roulage du pneu tout en étant de mise en oeuvre relativement aisée et économiquement intéressante sur un plan industriel.

Dans ce but, il est proposé un pneu pour véhicule poids lourd comprenant une bande de roulement prolongée transversalement de part et d'autre par des flancs se terminant par des bourrelets destinés à coopérer avec une jante de montage. En outre, ce pneu comprend une armature de carcasse radiale formée d'une pluralité de renforts orientés selon direction faisant un angle au moins égal à 80 degrés avec la direction circonférentielle.

Cette armature de carcasse est ancrée dans chacun des bourrelets à une structure d'ancrage comprenant une armature de renforcement circonférentiel autour de laquelle est formée un profilé d'enrobage dont le contour de la section méridienne comprend une partie radialement à l'intérieur et une partie radialement à l'extérieur, ces deux parties se raccordant en deux points axialement les plus éloignés du contour dudit profilé d'enrobage.

Par ailleurs, cette armature de carcasse est en partie enroulée autour du profilé d'enrobage de la structure d'ancrage en passant de l'intérieur du pneu vers l'extérieur, l'extrémité de cette armature de carcasse étant localisée sur ou à proximité du contour du profilé d'enrobage.

Ce pneu comprend de plus une première armature de liaison formée d'une pluralité de renforts orientés dans une direction faisant un angle supérieur ou égal à 70 degrés avec la direction circonférentielle. Cette première armature de liaison comprend une première partie en contact avec l'armature de carcasse entre un point P1 radialement à l'extérieur par rapport au point du contour du profilé d'enrobage de la structure d'ancrage radialement le plus à l'extérieur et le point d'extrémité de l'armature de carcasse, cette première armature de liaison se prolongeant au delà de l'extrémité de l'armature de carcasse par une seconde partie en contact avec le profilé d'enrobage jusqu'à un point P2 situé sur la partie radialement à l'extérieur du contour du profilé d'enrobage.

Ce pneu comprend par ailleurs une deuxième armature de liaison enveloppant la première armature de liaison et passant radialement sous le profilé d'enrobage radialement à l'intérieur de ladite première armature de liaison pour former un brin interne et un brin externe, le brin interne étant situé axialement à l'intérieur par rapport à l'armature de carcasse et le brin externe étant situé axialement à l'extérieur de ladite armature de carcasse ; le brin interne est en contact sur une longueur V1 avec l'armature de carcasse entre un premier point d'extrémité D1 dudit premier brin et le point P1 d'extrémité de la première armature de liaison, le brin externe étant en contact avec l'armature de carcasse à partir d'un point D20 jusqu'à un point d'extrémité D2 du brin externe sur une longueur V2, les points D1 et D2 étant situés radialement au delà des points d'extrémité P1, P2 de la première armature de liaison.

Cette deuxième armature de liaison est formée d'une pluralité de renforts orientés selon une direction moyenne faisant un angle au plus égal à 50 degrés avec la direction circonférentielle.

L'originalité de la solution proposée réside, entre autre, dans le fait que la deuxième armature de liaison est ancrée autour de la structure d'ancrage de bourrelet tout en étant couplée à l'armature de carcasse axialement de part et d'autre de cette armature, en combinaison avec le positionnement de l'extrémité de l'armature de carcasse au voisinage de la structure d'ancrage. Dans une telle structure, l'extrémité de l'armature de carcasse est maintenue dans une zone subissant assez peu de contraintes et de déformations en roulage et cette extrémité est par ailleurs recouverte par au moins la deuxième armature.

Avantageusement et vue en coupe méridienne, la distance Y2 séparant l'extrémité radialement la plus à l'extérieur du brin externe de la deuxième armature de liaison et le point A de la structure de renforcement de l'armature de renforcement circonférentiel le plus à l'intérieur radialement est au moins égale à 20 pour cent et au plus égale à 60 pour cent de la distance radiale entre le point de l'armature de carcasse radialement le plus à l'extérieur et le point de la même armature de carcasse radialement le plus à l'intérieur.

De même, il est avantageux que la distance Y1 séparant l'extrémité radialement le plus à l'extérieur du premier brin de la deuxième armature de liaison et le point de la structure de renforcement de la structure d'ancrage le plus à l'intérieur radialement soit au moins égale à 15 pour cent et au plus égale à 40 pour cent de la distance radiale entre le point de l'armature de carcasse radialement le plus à l'extérieur et le point de la même armature de carcasse radialement le plus à l'intérieur.

Préférentiellement, la longueur de contact du premier brin de la deuxième armature de liaison est au moins égale à 20 pour cent de la distance séparant l'extrémité radialement la plus à l'extérieur du brin interne de la deuxième armature de liaison et le point de l'armature de renforcement circonférentiel de la structure d'ancrage le plus à l'intérieur radialement.

Avantageusement encore, la longueur de contact du brin externe de la deuxième armature de liaison est au moins égale à 15 pour cent de la distance séparant l'extrémité radialement la plus à l'extérieur du brin externe de la deuxième armature de liaison et le point de l'armature de renforcement circonférentiel de la structure d'ancrage le plus à l'intérieur radialement.

D'autres caractéristiques et avantages de l'invention ressortent de la description faite ci-après en référence aux dessins annexés qui montrent, à titre d'exemples non limitatifs, des formes de réalisation de l'objet de l'invention.

La figure 1 montre une section transversale d'un pneu selon l'invention ;

La figure 2 montre une autre variante de pneu selon l'invention dans laquelle la deuxième armature de liaison est découplée de l'armature de carcasse à ses deux extrémités ;

La figure 3 montre une autre variante selon laquelle la deuxième armature de liaison est formée de deux parties se superposant localement ;

La figure 4 montre une autre variante selon laquelle la première armature de liaison est placée entre la structure d'ancrage de bourrelet et l'armature de carcasse.

Définitions :

"Radialement" indique une direction perpendiculaire à l'axe de rotation

"Radialement vers extérieur" indique une direction perpendiculaire à l'axe de rotation et s'éloignant dudit l'axe de rotation.

"Radialement vers intérieur" : indique une direction perpendiculaire à l'axe de rotation et se rapprochant dudit l'axe de rotation.

"Axialement vers intérieur" : indique une direction parallèle à l'axe de rotation et orientée vers l'intérieur de la cavité à l'intérieur de laquelle s'exerce la pression de gonflage du pneu.

"Intérieur du pneu" désigne l'intérieur de la cavité du pneu dans laquelle agit la pression de gonflage.

"Section méridienne ou plan de coupe méridien" correspond à une coupe du pneu telle que le plan de coupe contient l'axe de rotation du pneu.

Des renforts sont dits "orientés radialement" dès lors qu'ils sont principalement contenus dans un plan de coupe méridien. Par extension, on admet ici que des renforts faisant un angle au moins égal à 80 degrés sont également radiaux.

Pour faciliter la lecture de la description des variantes montrées avec les figures, les mêmes références sont employées pour désigner des éléments de structure identiques.

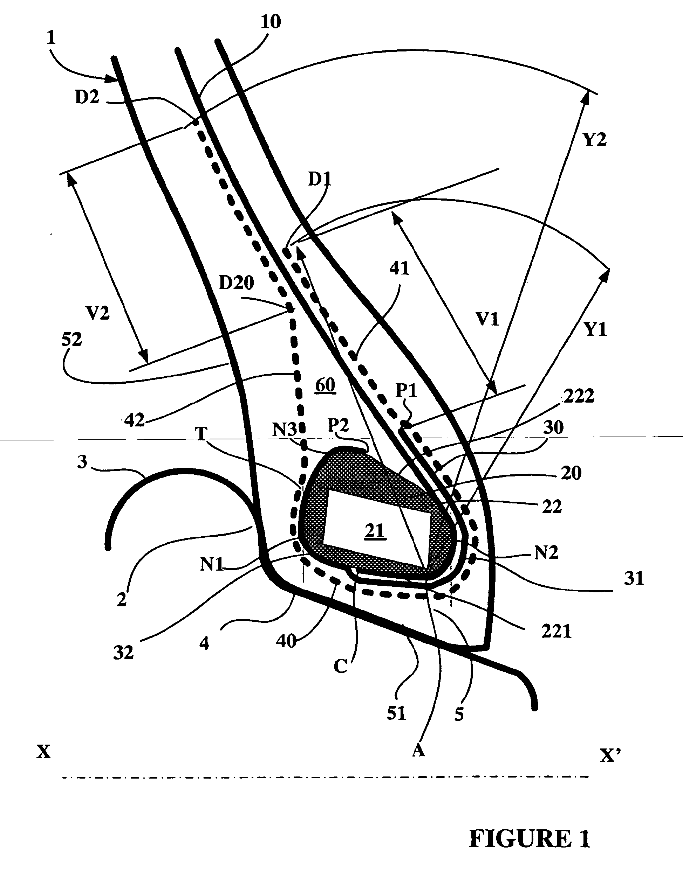

La figure 1 montre un bourrelet 5 d'un pneu 1 de dimension 295/60R22.5, ce pneu étant monté sur une jante de montage 2 dont on voit un siège de bourrelet 4 prolongé axialement à l'extérieur par un crochet 3. Le bourrelet 5 de ce pneu 1 comprend une partie de siège 51 destinée à être en contact avec le siège 4 de la jante 2, cette partie de siège se prolongeant axialement à l'extérieur par une partie externe 52. Le crochet 3 limite axialement le déplacement du bourrelet 5 lorsque le pneu est gonflé. Au cours du roulage, la partie externe 52 du bourrelet s'enroule plus ou moins autour du crochet 3. L'axe XX' est un axe parallèle à l'axe de rotation du pneu.

Le pneu 1 selon l'invention est renforcé par une armature de carcasse radiale 10 constituée d'une pluralité de câbles métalliques formés de plusieurs fils élémentaires de 18/100 de mm. Ces câbles sont noyés dans un mélange élastomère et sont orientés sensiblement suivant une direction radiale. Sur cette figure 1, on voit que l'armature de carcasse 10 est ancrée à l'une de ses extrémités autour d'une structure d'ancrage 20 dans un bourrelet 5, cette structure d'ancrage comprenant un profilé d'enrobage 22 enrobant une armature de renforcement circonférentiel 21 (dans le cas présent, la structure de renforcement est une tringle composée d'une pluralité de fils métalliques enroulés circonférentiellement). L'armature de carcasse suit le profil méridien d'une partie du contour du profilé d'enrobage 22 et est couplée mécaniquement à ce profilé d'enrobage par adhésion du matériau composant le profilé d'enrobage et du matériau enrobant les renforts de l'armature de carcasse.

Vu dans un plan de coupe méridien (c'est-à-dire dans un plan de coupe contenant l'axe de rotation du pneu), le profilé d'enrobage 22 a un contour comprenant une partie radialement à l'intérieur 221 et une partie radialement à l'extérieur 222, lesdites parties se rejoignant aux points N1, N2 axialement les plus éloignés du contour dudit profilé d'enrobage.

Axialement vers l'intérieur de l'armature de carcasse 10, une première armature de liaison 30, formée d'une pluralité de renforts orientés dans une direction faisant un angle supérieur ou égal à 70 degrés avec la direction circonférentielle, comprend une première partie 31 en contact avec armature de carcasse 10 entre un point P1 radialement à l'extérieur par rapport au point N3 du contour du profilé d'enrobage 22 radialement le plus à l'extérieur et le point C d'extrémité de l'armature de carcasse, cette première armature de liaison 30 se prolongeant au delà du point d'extrémité C de l'armature de carcasse par une seconde partie 32 en contact avec le profilé d'enrobage 22 jusqu'à un point P2 situé sur la partie radialement à l'extérieur 222 du contour du profilé d'enrobage 22.

Ce pneu comprend en outre une deuxième armature de liaison 40 enveloppant la première armature de liaison 30, cette deuxième armature passant radialement à l'intérieur du profilé d'enrobage 22 et radialement à l'intérieur de la première armature de liaison 30 pour former un brin interne 41 et un brin externe 42, le brin interne 41 étant situé axialement à l'intérieur par rapport à l'armature de carcasse 10 et le brin externe 42 étant situé axialement à l'extérieur par rapport à l'armature de carcasse 10.

Le brin interne 41 de la deuxième armature de liaison 40 est en contact sur une longueur V1 avec l'armature de carcasse entre un premier point d'extrémité D1 dudit brin interne 41 et le point P1 d'extrémité de la première armature de liaison 30, le brin externe 42 étant en contact avec l'armature de carcasse à partir d'un point D20 jusqu'à un point d'extrémité D2 du brin externe 42 sur une longueur V2. Les points D1 et D2 sont situés radialement au-delà des points d'extrémité P1, P2 de la première armature de liaison 30.

La deuxième armature de liaison 40 est formée d'une pluralité de renforts (ici des câbles métalliques à base de fils unitaire de diamètre 0.35mm) enrobés dans une composition à base d'élastomère, ces renforts étant orientés selon une direction moyenne faisant un angle au plus égal à 50 degrés avec la direction circonférentielle et encore plus préférentiellement un angle au moins égal à 20 degrés et au plus égal à 30 degrés (dans le cas présent : 30°). Le choix de ces valeurs d'angle a en outre pour effet de faciliter la fabrication et notamment le retournement autour de la structure d'ancrage.

Préférentiellement, les renforts des première et deuxième armatures de liaison sont identiques et peuvent être choisis parmi des renforts de nature textile ou métallique (par exemple : renforts en aramide 167x3)

L'extrémité C de l'armature de carcasse est située radialement à l'intérieur de la partie 221 intérieure du profilé d'enrobage 22 de la structure d'ancrage et axialement entre les points N1, N2 du contour dudit profilé d'enrobage axialement les plus éloignés.

Dans le cas décrit, on a les valeurs suivantes : Y1 = 50 mm ; Y2 = 63 mm ; V1 = 16 mm ; V2 = 12 mm.

Par ailleurs, un profilé 60 en mélange de caoutchouc est intercalé entre l'armature de carcasse et le deuxième brin de la deuxième armature de liaison 40 de manière à remplir le volume délimité par l'armature de carcasse et le brin externe 42 de la deuxième armature 40 radialement à l'extérieur de la structure d'ancrage 20 et jusqu'au point D20 de couplage de ce brin externe avec l'armature de carcasse. La matériau de ce profilé 60 est choisi de manière à avoir un module d'élasticité à 10% d'allongement compris entre 2 et 5 MPa (ici 4 MPa).

La distance Y2 séparant l'extrémité radialement le plus à l'extérieur du brin externe 42 de la deuxième armature de liaison 40 et le point A de la structure de renforcement de l'armature de renforcement circonférentiel (21) le plus à l'intérieur radialement est égale à 63 mm soit 45% de la distance radiale entre le point de l'armature de carcasse radialement le plus à l'extérieur et le point de la même armature de carcasse radialement le plus à l'intérieur (cette distance radiale étant ici égale à 140 mm).

Dans le cas présent, la distance Y1 séparant l'extrémité radialement le plus à l'extérieur du premier brin 41 de la deuxième armature de liaison 40 et le point A de la structure de renforcement de la structure d'ancrage le plus à l'intérieur radialement est égale à 50 mm soit 35% de la distance radiale entre le point de l'armature de carcasse radialement le plus à l'extérieur et le point de la même armature de carcasse radialement le plus à l'intérieur.

La longueur de contact V1 du premier brin 41 de la deuxième armature de liaison 40 est égale à 16 mm soit 32% de la distance Y1 (dans le cas présent Y1 = 50 mm) séparant l'extrémité D1 radialement la plus à l'extérieur du brin interne 41 de la deuxième armature de liaison 40 et le point A de l'armature de renforcement circonférentiel 21 de la structure d'ancrage le plus à l'intérieur radialement.

La longueur de contact V2 du brin externe 42 de la deuxième armature de liaison 40 est égale à 12 mm soit 19% de la distance Y2 (dans le cas présent Y2 = 63 mm) séparant l'extrémité D2 radialement la plus à l'extérieur du brin externe 42 de la deuxième armature de liaison 40 et le point A de l'armature de renforcement circonférentiel 21 de la structure d'ancrage le plus à l'intérieur radialement.

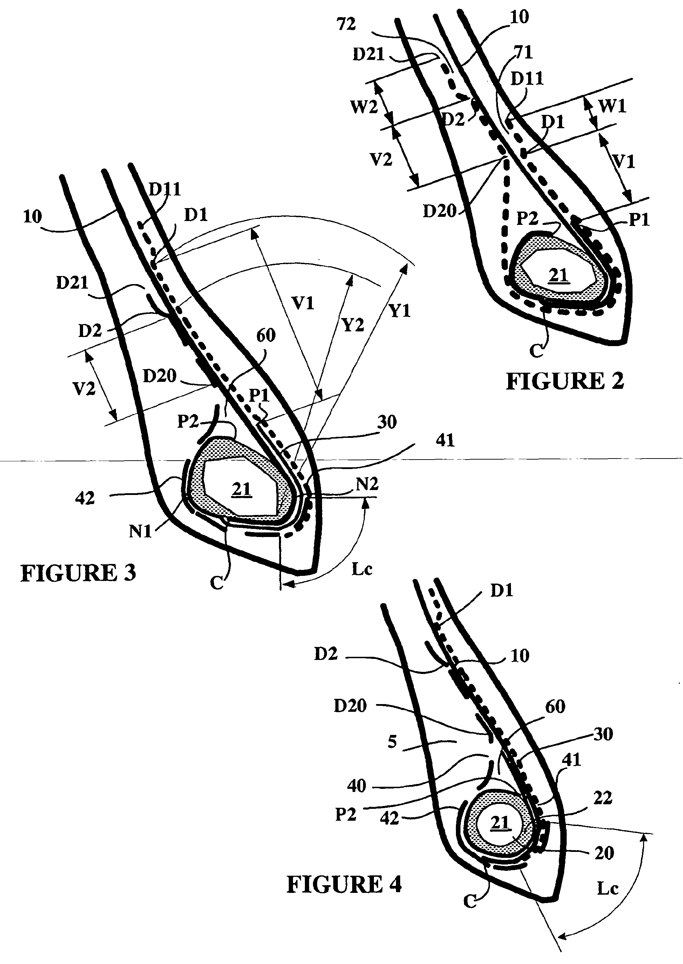

La figure 2 montre une variante de bourrelet de pneu selon l'invention selon laquelle des profilés 71, 72 en mélange de caoutchouc sont intercalés entre l'armature de carcasse et les extrémités des premier et second brins 41, 42 de la deuxième armature de liaison 40 de manière à diminuer les contraintes de cisaillement près desdites extrémités. Les longueurs de découplage, respectivement W1 et W2 sont préférentiellement supérieures à 5 mm.

La figure 3 montre une autre variante selon laquelle le premier brin 41 de la deuxième armature de liaison 40 s'étend radialement au delà du second brin 42 de la même armature. Selon cette variante le volume du profilé 60 radialement à l'extérieur du profilé d'enrobage est très sensiblement réduit de manière à créer un couplage mécanique fort entre l'armature de carcasse et la deuxième armature de liaison.

Dans cette variante montrée avec la figure 3, la deuxième armature de liaison 40 est formée d'un premier brin 41 et d'un second brin 42, lesdits brins 41 et 42 se superposant partiellement radialement à l'intérieur du profilé d'enrobage de la structure d'ancrage et axialement à l'intérieur par rapport au point C d'extrémité de la carcasse 10. Dans le cas montré, la longueur méridienne Le de la zone de superposition entre les premier et second brin est au moins égale à la moitié de la distance axiale séparant les points axialement les plus éloignés N1 et N2 de la structure d'ancrage 20. Dans le cas présent, la distance séparant les points N1, N2 axialement les plus éloignés de la structure d'ancrage est égale à 20 mm tandis que la longueur de la zone de superposition est égale à 10 mm Les points N1 et N2 sont respectivement déterminés en construisant des tangentes au profilé d'enrobage 22, lesdites tangentes étant perpendiculaires à l'axe de rotation XX'.

Cette variante est intéressante car elle permet de différencier les matériaux des premier et deuxième brins soit en employant des renforts de nature de différente (par exemple renfort textile pour le deuxième brin et renfort métallique pour le premier brin) soit en employant des matériaux d'enrobage différents soit encore une combinaison des deux précédents. Elle permet également une fabrication améliorée par une plus grande précision dans la position des composants et armatures ainsi qu'une réduction de l'encombrement sur les postes de fabrication.

La figure 4 montre une autre variante de pneu selon laquelle la première armature de liaison 30 est placée non plus entre l'armature de carcasse 10 et la deuxième armature de liaison 40 mais entre la structure d'ancrage 20 dans le bourrelet 5 et l'armature de carcasse 10. Dans cette variante, l'armature de renforcement de la structure d'ancrage est une tringle 21 de section sensiblement circulaire (tringle de type tressée, c'est-à-dire formée par enroulement hélicoïdal de plusieurs fils autour d'une âme circulaire). Cette tringle 21 est entourée par un profilé de caoutchouc 22 qui est obtenu par un enroulement de mélange de caoutchouc d'épaisseur quasi constante autour de la tringle. Le contour extérieur du profilé d'enrobage 22 vu en coupe méridienne est alors sensiblement circulaire.

Sur quasiment tout le tour de cette structure d'ancrage 20, une première armature de liaison 30 est enroulée ; cette première armature 30 est prolongée radialement vers l'extérieur par une partie d'armature 31 située axialement entre l'armature de carcasse 10 et le profilé 60 de section sensiblement triangulaire, ce profilé servant de découplage entre l'armature de carcasse 10 et la partie 42 axialement à l'extérieur de la deuxième armature de liaison 40. Le point d'extrémité P2 de l'armature de liaison 30 est situé sur le contour de la structure d'ancrage 20 très près du point de tangence de la partie d'armature 31 avec ladite structure d'ancrage. Comme dans la variante précédente montrée à la figure 3, la deuxième armature de liaison 40 est constituée de deux parties indépendantes 41 et 42, ces parties indépendantes se chevauchant sur une longueur Lc dans une région sensiblement radialement et axialement à l'intérieur de la structure d'ancrage 20.

Par ailleurs dans cette variante, l'armature de carcasse est à ses extrémités placée entre les première et deuxième armature de liaison. Cette disposition assure une meilleure efficacité de tenue mécanique de l'armature de carcasse dans chaque bourrelet et évite que les renforts de cette armature ne viennent en contact avec la tringle 21 en cours d'usage du pneu.

## Revendications

1. - Pneu pour véhicule poids lourd comprenant une bande de roulement prolongée transversalement de part et d'autre par des flancs se terminant par des bourrelets destinés à coopérer avec une jante de montage, ce pneu comprenant en outre :
- une armature de carcasse radiale (10) comprenant une pluralité de renforts orientés selon une direction faisant un angle au moins égal à 80 degrés avec la direction circonférentielle,
- cette armature de carcasse (10) étant ancrée dans chacun des bourrelets à une structure d'ancrage (20), cette structure d'ancrage (20) comprenant une armature de renforcement circonférentiel (21) autour de laquelle est formée un profilé d'enrobage (22) dont le contour de la section méridienne, comprend une partie radialement à l'intérieur (221) et une partie radialement à l'extérieur (222), lesdites parties se raccordant aux points N1, N2 axialement les plus éloignés du contour dudit profilé d'enrobage,
- cette armature de carcasse (10) étant en partie enroulée autour du profilé d'enrobage (22) de la structure d'ancrage en passant de l'intérieur du pneu vers l'extérieur, l'extrémité C de cette armature de carcasse étant localisée sur ou à proximité du contour du profilé d'enrobage (22),
ce pneu étant **caractérisé en ce qu'**il comprend une première armature de liaison (30), formée d'une pluralité de renforts orientés dans une direction faisant un angle supérieur ou égal à 70 degrés avec la direction circonférentielle, comprenant une première partie (31) en contact avec l'armature de carcasse (10) entre un point P1 radialement à l'extérieur par rapport au point N3 du contour du profilé d'enrobage (22) de la structure d'ancrage radialement le plus à l'extérieur et le point C d'extrémité de l'armature de carcasse, cette première armature de liaison (30) se prolongeant au delà de l'extrémité C de l'armature de carcasse par une seconde partie (32) en contact avec le profilé d'enrobage (22) jusqu'à un point P2 situé sur la partie radialement à l'extérieur (222) du contour du profilé d'enrobage (22) ;
et une deuxième armature de liaison (40) enveloppant la première armature de liaison (30) et passant radialement sous le profilé d'enrobage (22) radialement à l'intérieur de ladite première armature de liaison (30) pour former un brin interne (41) et un brin externe (42), le brin interne étant axialement à l'intérieur par rapport à l'armature de carcasse et le brin externe étant axialement à l'extérieur de ladite armature de carcasse (10),
le brin interne (41) étant en contact sur une longueur V1 avec l'armature de carcasse entre un premier point d'extrémité D1 dudit premier brin et le point P1 d'extrémité de la première armature de liaison (30), le brin externe (42) étant en contact avec l'armature de carcasse à partir d'un point D20 jusqu'à un point d'extrémité D2 du brin externe sur une longueur V2, les points D1 et D2 étant situés radialement au delà des points d'extrémité P1, P2 de la première armature de liaison (30),
cette deuxième armature de liaison (40) étant formée d'une pluralité de renforts orientés selon une direction moyenne faisant un angle au plus égal à 50 degrés avec la direction circonférentielle.

2. - Pneu selon la revendication 1 **caractérisé en ce que** la deuxième armature de liaison (40) est formée d'une pluralité de renforts faisant un angle avec la direction circonférentielle au moins égal à 20 degrés et au plus égal à 30 degrés.

3. - Pneu selon la revendication 1 ou la revendication 2 **caractérisé en ce que** l'extrémité C de l'armature de carcasse est située radialement à l'intérieur de la partie (221) intérieure du profilé d'enrobage (22) de la structure d'ancrage et axialement entre les points N1, N2 du contour dudit profilé d'enrobage axialement les plus éloignés.

4. - Pneu selon l'une quelconque des revendications 1 à 3 **caractérisé en ce que** la longueur de contact V2 du brin externe (42) de la deuxième armature de liaison (40) est au moins égale à 15 pour cent de la distance Y2 séparant l'extrémité D2 radialement la plus à l'extérieur du brin externe (42) de la deuxième armature de liaison (40) et le point A de l'armature de renforcement circonférentiel (21) de la structure d'ancrage le plus à l'intérieur radialement.

5. - Pneu selon l'une quelconque des revendications 1 à 4 **caractérisé en ce que** la longueur de contact V 1 du premier brin (41) de la deuxième armature de liaison (40) est au moins égale à 20 pour cent de la distance Y1 séparant l'extrémité D1 radialement la plus à l'extérieur du brin interne (41) de la deuxième armature de liaison (40) et le point A de l'armature de renforcement circonférentiel (21) de la structure d'ancrage le plus à l'intérieur radialement.

6. - Pneu selon l'une quelconque des revendications 1 à 5 **caractérisé en ce que** la distance Y2 séparant l'extrémité radialement le plus à l'extérieur du brin externe (42) de la deuxième armature de liaison (40) et le point A de la structure de renforcement de l'armature de renforcement circonférentiel (21) le plus à l'intérieur radialement est au moins égale à 20 pour cent et au plus égale à 60 pour cent de la distance radiale entre le point de l'armature de carcasse radialement le plus à l'extérieur et le point de la même armature de carcasse radialement le plus à l'intérieur.

7. - Pneu selon l'une quelconque des revendications 1 à 6 **caractérisé en ce que** la distance Y1 séparant l'extrémité radialement le plus à l'extérieur du premier brin (41) de la deuxième armature de liaison (40) et le point A de la structure de renforcement de la structure d'ancrage le plus à l'intérieur radialement est au moins égale à 15 pour cent et au plus égale à 40 pour cent de la distance radiale entre le point de l'armature de carcasse radialement le plus à l'extérieur et le point de la même armature de carcasse radialement le plus à l'intérieur.

8. - Pneu selon l'une quelconque des revendications 1 à 7 **caractérisé en ce que** les renforts des première et deuxième armatures de liaison sont identiques et choisis parmi des renforts de nature textile ou métallique.

9. - Pneu selon l'une quelconque des revendications 1 à 8 **caractérisé en ce que** les brins (41, 42) de la deuxième armature (40) sont localement découplées de l'armature de carcasse (10) de manière à diminuer les contraintes de cisaillement près desdites extrémités, un matériau élastomère étant intercalé entre lesdites armatures.

10. - Pneu selon l'une quelconque des revendications 1 à 9 **caractérisé en ce que** la deuxième armature de liaison (40) est formée de deux parties discontinues constituant chacune l'un des brins (41, 42), ces parties discontinues se chevauchant dans une zone de superposition.

11. - Pneu selon la revendication 10 **caractérisé en ce que** la zone de superposition est située au voisinage du profilé d'enrobage de la structure d'ancrage et **en ce que** la longueur méridienne Lc de la zone de superposition est au moins égale à la moitié de la distance axiale séparant les points axialement les plus éloignés de la structure d'ancrage (20).

12. - Pneu selon l'une quelconque des revendications 1 à 11 **caractérisé en ce que** la première armature de liaison (30) est intercalée entre le profilé d'enrobage de la structure d'ancrage (20) de bourrelet et l'armature de carcasse (10).

## Claims

1. Heavy goods vehicle tyre comprising a tread extended transversely on each side by sidewalls ending in beads intended to collaborate with a mounting rim, this tyre further comprising:
- a radial carcass reinforcement (10) comprising a plurality of reinforcing members directed in a direction that makes an angle of at least 80 degrees with the circumferential direction,
- this carcass reinforcement (10) being anchored in each of the beads to an anchoring structure (20), this anchoring structure (20) comprising a circumferential reinforcement armature (21) around which is formed a coating profile (22) of which the contour of the meridian section comprises a part (221) radially on the inside and a part (222) radially on the outside, the said parts meeting at the points N1, N2 axially furthest from the contour of the said coating profile,
- this carcass reinforcement (10) being partially wound around the coating profile (22) of the anchoring structure passing from the inside of the tyre towards the outside, the end C of this carcass reinforcement being located on or near the contour of the coating profile (22),
- this tyre being **characterized in that** it comprises a first connecting reinforcement (30), formed of a plurality of reinforcing members directed in a direction that makes an angle of 70 degrees or more with the circumferential direction, comprising a first part (31) in contact with the carcass reinforcement (10) between a point P1 radially on the outside of the point N3 of the contour of the coating profile (22) of the radially outermost anchoring structure and the end point C of the carcass reinforcement, this first connecting reinforcement (30) being extended beyond the end C of the carcass reinforcement by a second part (32) in contact with the coating profile (22) as far as a point P2 situated on the radially outside part (222) of the contour of the coating profile (22,
and a second connecting reinforcement (40) enveloping the first connecting reinforcement (30) and passing radially under the coating profile (22) radially on the inside of the said first connecting reinforcement (30) so as to form an internal portion (41) and an external portion (42), the internal portion being axially on the inside of the carcass reinforcement and the external portion being axially on the outside of the said carcass reinforcement (10),
the internal portion (41) being in contact over a length V1 with the carcass reinforcement between a first end point D1 of the said first portion and the end point P1 of the first connecting reinforcement (30), the external portion (42) being in contact with the carcass reinforcement from a point D20 as far as an end point D2 of the external portion over a length V2, the points D1 and D2 being situated radially beyond the end points P1, P2 of the first connecting reinforcement (30),
this second connecting reinforcement (40) being formed of a plurality of reinforcing members directed in a mean direction that makes an angle of 50 degrees at most with the circumferential direction.

2. Tyre according to Claim 1, **characterized in that** the second connecting reinforcement (40) is formed of a plurality of reinforcing members that make an angle of at least 20 degrees and at most 30 degrees with the circumferential direction.

3. Tyre according to Claim 1 or Claim 2, **characterized in that** the end C of the carcass reinforcement is situated radially inside of the inner part (221) of the coating profile (22) of the anchoring structure and axially between the axially most remote points N1, N2 of the contour of the said coating profile.

4. Tyre according to any one of Claims 1 to 3, **characterized in that** the contact length V2 of the external portion (42) of the second connecting reinforcement (40) is at least equal to 15 per cent of the distance Y2 separating the radially outermost end D2 of the external portion (42) of the second connecting reinforcement (40) from the point A of the circumferential reinforcement armature (21) of the anchoring structure that is radially innermost.

5. Tyre according to any one of Claims 1 to 4, **characterized in that** the contact length V1 of the first portion (41) of the second connecting reinforcement (40) is equal to at least 20 per cent of the distance Y1 separating the radially outermost end D1 of the internal portion (41) of the second connecting reinforcement (40) from the point A of the circumferential reinforcement armature (21) of the anchoring structure that is radially innermost.

6. Tyre according to any one of Claims 1 to 5, **characterized in that** the distance Y2 separating the radially outermost end of the external portion (42) of the second connecting reinforcement (40) from the point A of the reinforcing structure of the circumferential reinforcement armature (21) that is radially innermost is equal to at least 20 per cent and at most 60 per cent of the radial distance between the radially outermost point on the carcass reinforcement and the radially innermost point on the same carcass reinforcement.

7. Tyre according to any one of Claims 1 to 6, **characterized in that** the distance Y1 separating the radially outermost end of the first portion (41) of the second connecting reinforcement (40) from the point A of the reinforcing structure of the anchoring structure that is radially innermost is equal to at least 15 per cent and at most 40 per cent of the radial distance between the radially outermost point on the carcass reinforcement and the radially innermost point on the same carcass reinforcement.

8. Tyre according to any one of Claims 1 to 7, **characterized in that** the reinforcing members in the first and second connecting reinforcements are identical and chosen from reinforcing members of textile or metallic nature.

9. Tyre according to any one of Claims 1 to 8, **characterized in that** the portions (41, 42) of the second reinforcement (40) are locally decoupled from the carcass reinforcement (10) in such a way as to reduce the shear stresses near the said ends, an elastomeric material being inserted between the said reinforcements.

10. Tyre according to any one of Claims 1 to 9, **characterized in that** the second connecting reinforcement (40) is formed of two discontinuous parts each constituting one of the portions (41, 42), these discontinuous parts overlapping in a region of superposition.

11. Tyre according to Claim 10, **characterized in that** the region of superposition is situated near the coating profile of the anchoring structure and **in that** the meridian length Lc of the region of superposition is at least equal to half the axial distance between the axially remotest points of the anchoring structure (20).

12. Tyre according to any one of Claims 1 to 11, **characterized in that** the first connecting reinforcement (30) is inserted between the coating profile of the bead anchoring structure (20) and the carcass reinforcement (10).

## Patentansprüche

1. Reifen für einen Schwerlastwagen, mit einem Laufstreifen, der in Querrichtung zu beiden Seiten von Flanken verlängert wird, die in Wülsten enden, welche dazu bestimmt sind, mit einer Montagefelge zusammenzuwirken, wobei dieser Reifen außerdem enthält:
- eine radiale Karkassenbewehrung (10) mit mehreren Verstärkungen, die in einer Richtung ausgerichtet sind, die einen Winkel von mindestens 80 Grad mit der Umfangsrichtung bildet,
- wobei diese Karkassenbewehrung (10) in jedem der Wülste an einer Verankerungsstruktur (20) verankert ist, wobei diese Verankerungsstruktur (20) eine Umfangsverstärkungsbewehrung (21) enthält, um die herum ein Umhüllungsprofilteil (22) geformt ist, dessen Meridianquerschnittsumriss einen radial inneren Teil (221) und einen radial äußeren Teil (222) enthält, wobei die Teile sich an den axial am weitesten entfernten Punkten N1, N2 des Umrisses des Umhüllungsprofilteils verbinden,
- wobei diese Karkassenbewehrung (10) zum Teil um das Umhüllungsprofilteil (22) der Verankerungsstruktur gewickelt ist, indem sie von der Innenseite des Reifens zur Außenseite verläuft, wobei das Ende C dieser Karkassenbewehrung sich auf dem oder in der Nähe des Umrisses des Umhüllungsprofilteils (22) befindet,
- wobei dieser Reifen **dadurch gekennzeichnet ist, dass** er eine von mehreren Verstärkungen, die in einer Richtung ausgerichtet sind, die einen Winkel von mehr als oder gleich 70 Grad mit der Umfangsrichtung bildet, geformte erste Verbindungsbewehrung (30) enthält, die einen ersten Teil (31) enthält, der zwischen einem bezüglich des radial am weitesten außen liegenden Punkts N3 des Umrisses des Umhüllungsprofilteils (22) der Verankerungsstruktur radial äußeren Punkt P1 und dem Endpunkt C der Karkassenbewehrung mit der Karkassenbewehrung (10) in Kontakt steht, wobei diese erste Verbindungsbewehrung (30) jenseits des Endes C der Karkassenbewehrung durch einen zweiten Teil (32) verlängert wird, der mit dem Umhüllungsprofilteil (22) bis zu einem Punkt P2 in Kontakt steht, der sich auf dem radial äußeren Teil (222) des Umrisses des Umhüllungsprofilteils (22) befindet, und eine zweite Verbindungsbewehrung (40) enthält, die die erste Verbindungsbewehrung (30) umhüllt und radial unter dem Umhüllungsprofilteil (22) radial innen zur ersten Verbindungsbewehrung (30) verläuft, um ein inneres Teilstück (41) und ein äußeres Teilstück (42) zu formen, wobei das innere Teilstück bezüglich der Karkassenbewehrung axial innen und das äußere Teilstück bezüglich der Karkassenbewehrung (10) axial außen liegt,
wobei das innere Teilstück (41) über eine Länge V1 zwischen einem ersten Endpunkt D1 des ersten Teilstücks und dem Endpunkt P1 der ersten Verbindungsbewehrung (30) mit der Karkassenbewehrung in Kontakt ist, wobei das äußere Teilstück (42) über eine Länge V2 ausgehend von einem Punkt D20 bis zu einem Endpunkt D2 des äußeren Teilstücks mit der Karkassenbewehrung in Kontakt steht, wobei die Punkte D1 und D2 sich radial jenseits der Endpunkte P1, P2 der ersten Verbindungsbewehrung (30) befinden,
wobei diese zweite Verbindungsbewehrung (40) von mehreren Verstärkungen geformt wird, die gemäß einer mittleren Richtung ausgerichtet sind, die einen Winkel von höchstens 50 Grad mit der Umfangsrichtung bildet.

2. Reifen nach Anspruch 1, **dadurch gekennzeichnet, dass** die zweite Verbindungsbewehrung (40) von mehreren Verstärkungen geformt wird, die mit der Umfangsrichtung einen Winkel von mindestens 20 Grad und höchstens 30 Grad bilden.

3. Reifen nach Anspruch 1 oder Anspruch 2, **dadurch gekennzeichnet, dass** das Ende C der Karkassenbewehrung sich bezüglich des inneren Teils (221) des Umhüllungsprofilteils (22) der Verankerungsstruktur radial innen und axial zwischen den axial am weitesten entfernten Punkten N1, N2 des Umrisses des Umhüllungsprofilteils befindet.

4. Reifen nach einem der Ansprüche 1 bis 3, **dadurch gekennzeichnet, dass** die Kontaktlänge V2 des äußeren Teilstücks (42) der zweiten Verbindungsbewehrung (40) mindestens gleich 15 Prozent des Abstands Y2 ist, der das radial am weitesten außen liegende Ende D2 des äußeren Teilstücks (42) der zweiten Verbindungsbewehrung (40) und den radial am weitesten innen liegenden Punkt A der Umfangsverstärkungsbewehrung (21) der Verankerungsstruktur trennt.

5. Reifen nach einem der Ansprüche 1 bis 4, **dadurch gekennzeichnet, dass** die Kontaktlänge V1 des ersten Teilstücks (41) der zweiten Verbindungsbewehrung (40) mindestens gleich 20 Prozent des Abstands Y1 ist, der das radial am weitesten außen liegende Ende D1 des inneren Teilstücks (41) der zweiten Verbindungsbewehrung (40) und den radial am weitesten innen liegenden Punkt A der Umfangsverstärkungsbewehrung (21) der Verankerungsstruktur trennt.

6. Reifen nach einem der Ansprüche 1 bis 5, **dadurch gekennzeichnet, dass** der Abstand Y2, der das radial am weitesten außen liegende Ende des äußeren Teilstücks (42) der zweiten Verbindungsbewehrung (40) und den radial am weitesten innen liegenden Punkt A der Verstärkungsstruktur der Umfangsverstärkungsbewehrung (21) trennt, mindestens gleich 20 Prozent und höchstens gleich 60 Prozent des radialen Abstands zwischen dem radial am weitesten außen liegenden Punkt der Karkassenbewehrung und dem radial am weitesten innen liegenden Punkt der gleichen Karkassenbewehrung ist.

7. Reifen nach einem der Ansprüche 1 bis 6, **dadurch gekennzeichnet, dass** der Abstand Y1, der das radial am weitesten außen liegende Ende des ersten Teilstücks (41) der zweiten Verbindungsbewehrung (40) und den radial am weitesten innen liegenden Punkt A der Verstärkungsstruktur der Verankerungsstruktur trennt, mindestens gleich 15 Prozent und höchstens gleich 40 Prozent des radialen Abstands zwischen dem radial am weitesten außen liegenden Punkt der Karkassenbewehrung und dem radial am weitesten innen liegenden Punkt der gleichen Karkassenbewehrung ist.

8. Reifen nach einem der Ansprüche 1 bis 7, **dadurch gekennzeichnet, dass** die Verstärkungen der ersten und zweiten Verbindungsbewehrungen gleich sind und aus Verstärkungen von textiler oder metallischer Beschaffenheit ausgewählt werden.

9. Reifen nach einem der Ansprüche 1 bis 8, **dadurch gekennzeichnet, dass** die Teilstücke (41, 42) der zweiten Bewehrung (40) lokal von der Karkasseribewehrung (10) entkoppelt sind, um die Scherbeanspruchungen nahe den Enden zu verringern, wobei ein Elastomermaterial zwischen die Bewehrungen eingefügt wird.

10. Reifen nach einem der Ansprüche 1 bis 9, **dadurch gekennzeichnet, dass** die zweite Verbindungsbewehrung (40) von zwei unterbrochenen Teilen geformt wird, die je eines der Teilstücke (41, 42) bilden, wobei diese unterbrochenen Teile sich in einem Überlagerungsbereich überlappen.

11. Reifen nach Anspruch 10, **dadurch gekennzeichnet, dass** der Überlagerungsbereich sich in der Nähe des Umhüllungsprofilteils der Verankerungsstruktur befindet, und dass die Meridianlänge Lc des Überlagerungsbereichs mindestens gleich der Hälfte des axialen Abstands ist, der die axial am weitesten entfernten Punkte der Verankerungsstruktur (20) trennt.

12. Reifen nach einem der Ansprüche 1 bis 11, **dadurch gekennzeichnet, dass** die erste Verbindungsbewehrung (30) zwischen das Umhüllungsprofilteil der Wulst-Verankerungsstruktur (20) und die Karkassenbewehrung (10) eingefügt ist.
